# EUROPEAN PATENT SPECIFICATION

(11) **EP 2 506 146 B1**
(45) Date of publication and mention of the grant of the patent: **13.03.2019**
(21) Application number: 12305355.5
(22) Date of filing: 27.03.2012
(51) Int. Cl.: G06F 9/48, G06F 21/00

(54) **System and method for activating, managing and deactivating a plurality of virtual machines on a user device**
System und Verfahren zur Aktivierung, Verwaltung und Deaktivierung einer Vielzahl virtueller Maschinen auf einer Benutzervorrichtung
Système et procédé permettant d'activer, de gérer et de désactiver une pluralité de machines virtuelles sur un dispositif utilisateur

(30) Priority: 31.03.2011 US 201161470266 P
(43) Date of publication of application: 03.10.2012
(73) Proprietor: Orange, 75015 Paris (FR)
(72) Inventor: Mandanapu, Subash, San Bruno, CA 94066 (US); Chaput, Jean-Baptiste, San Francisco, CA 94123 (US); Mallya, Satya, San Jose, CA 94134 (US)
(74) Representative: Vidon Brevets & Stratégie

(56) References cited:
- US-A1- 2007 250 833
- US-A1- 2008 082 447
- US-A1- 2010 251 254

## Description

### BACKGROUND

The present invention relates to a system and method for activating a plurality of pre-installed virtual machines on a user device by using an over-the-air (OTA) process and providing a mechanism for switching between activated virtual machines.

It is known to provide a user with a device containing preloaded application files that are executable within a specific operating system, but that are initially locked (i.e., unusable or possibly operable in some limited capacity or for a limited duration of time). If the user of the device desires access, a request (usually triggered by a payment of some fee and an action by the user or an automated action) can be provided to a server containing an unlock key, and, in response, the server will transmit the key to the device which can then be used to unlock the particular application.

However, in such a system, only applications associated with a native or host operating system (OS) of the device can be activated-the activation, process control, and data access and control takes place within the context and confines of the host OS, and the applications must run within this OS. Such a device cannot activate applications that do not run natively within the host OS and has no viable ability to do so.

It is also known to utilize a virtual machine in a portable mass storage device that is used to store large files such as digital pictures, movies and music. Such a mass storage device has firmware with security mechanisms that limit access to read/write operations to ensure reliable operation of the device and to prevent unwanted copying or storing of secure content such a copyrighted material.

Although security mechanisms in this device generally limit access, the firmware is operable to work with a virtual machine and allows the virtual machine to access the secure content and work in conjunction with the firmware to read and write data to the mass storage memory, if the virtual machine is present. The virtual machine is either loaded but not activated at the time of manufacture, or is downloaded and activated post manufacture. Any royalty for the virtual machine is paid for only if and when the virtual machine is both present and activated in the device.

This reference, however, does not address how to switch between and manage multiple VMs that may be present on a given device, and tries to make the management of VMs as transparent to the end user as possible. Furthermore, this reference does not address how communications are handled among the various system components for activating and deactivating VMs.
Document US2008082447 teaches a method for activating a virtual machine available in a mass memory card.

### SUMMARY

Accordingly, a method is provided for activating a virtual machine in an electronic device, the method comprising: initiating a host machine on the device, the host machine having a virtual machine manager that manages a plurality of locked virtual machines, receiving, by the device in a virtualization layer, a command from an external server that is a request to initiate an activation of a virtual machine that is locked on the device; sending the received command by the virtualization layer to the virtual machine manager of the host machine, verifying, by the virtual machine manager, using a processor of the device, that the activation initiation request is a proper request, and if so, instructing a provisioning client that is a part of the virtualization layer to activate the virtual machine; and unlocking the virtual machine by the provisioning client.

An associated electronic device is also provided comprising a processor, and a plurality of locked virtual machines (VMs) that are executable on said processor through a virtualization layer, each locked VM being associated with a VM identifier (ID), wherein the processor comprises: an activation code receiver that receives activation codes for the selection of locked VMs, a forwarding routine that forwards the received activation codes to the virtualization layer to each selected locked VM for activation, and an activation routine that activates the locked VMs using their respective activation codes.

### DESCRIPTION OF THE DRAWINGS

Various embodiments of the invention are illustrated in the following drawing figures.
- Figure 1: is a block diagram according to an embodiment of the invention;
- Figure 2: is a flow chart illustrating method steps that may be performed in an embodiment; and
- Figures 3A, B: illustrate exemplary screen shots on a device according to an embodiment.

### DETAILED DESCRIPTION OF THE EMBODIMENTS

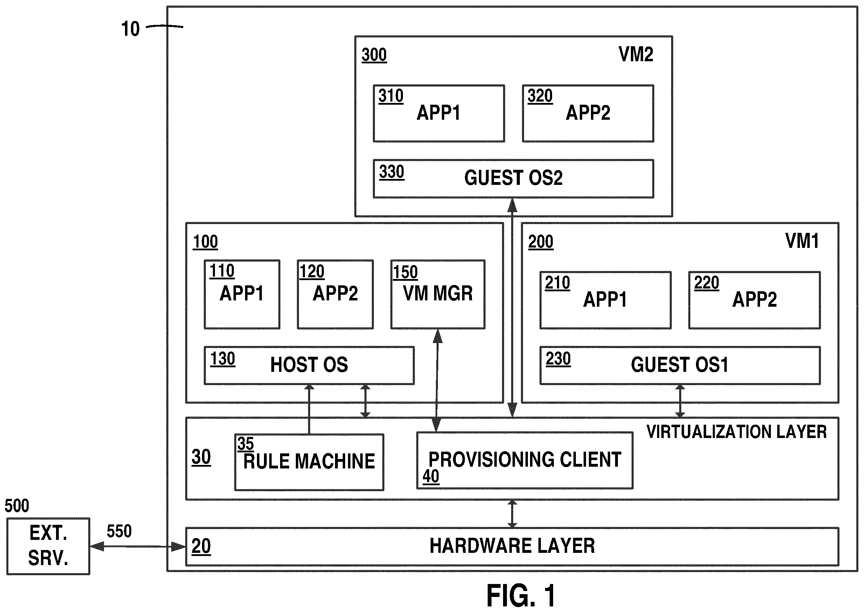

Figure 1 is a block diagram illustrating a user device 10 that is in communication with an external server or service 500 via a communications link 550. Such devices typically have a hardware layer 20 that directly interfaces at a low level with the hardware of the device, and a virtualization layer 30 residing above the hardware layer 20 that is outside of the context of the various host and virtual systems that are present on the device, the virtualization layer 30 serving to facilitate communications between a host system 100 and any virtual machines 200, 300 that might be present.

Mobile virtualization technology enables original equipment manufacturers (OEMS) to install multiple OSs (in Figure 1, a host OS 130 is provided, along with guest OS1 230, and guest OS2 330) on the same hardware.

A host system 100 comprising a host OS 130 and applications 110, 120 is generally required. However, the user may not need all of the OSs 230, 330 and associated virtual machines (VM1) 200, (VM2) 300 and applications (APP1) 210, 310, (APP2) 220, 320, that a manufacturer might wish to make available to a user. But based on the user's need, and possibly willingness to pay, the user may desire to activate one or more of the virtual machines 200, 300 and applications 210, 220, 310, 320 associated with these virtual machines.

Initially, the device 10 is delivered to a user with the virtual machines 200, 300 in a disabled or deactivated state. The challenge to activate this type of system is complicated due the provisioning client 40 which needs to interact with virtualization layer 30.

In the illustration here after, the activation request command is described as an Over The Air (OTA) command. Alternatively, the command may be delivered using a wired connection, like a USB cable to connect the electronic device to a computer for power charging or/and content management.

Messages arriving over the communication link 550 from an external server 500 can be delineated into Type I messages and Custom OTA messages (these types are definitional as used in this specification-the terms are not industry standards). Type I messages include traditional messages that are directed to applications on the device. Type I messages can also include known OTA commands for initiating communications with a data service, including the setting of network parameters, number of minutes per month, etc. Some of these messages are based on industry standards, and some are provider and device specific.

Custom OTA messages are herein newly defined custom OTA messages and relate to activation, deactivation, suspension/pause, and other type of control associated with managing a VM and its relationship with a data service. An activation message is one directing the device to activate one of the inactive VMs on the device, and a deactivation message correspondingly deactivates one of the active VMs on the device. A suspension/pause message may put the VM/service on hold for reasons such as failure to pay a bill, a user traveling outside of a service zone for an extended period of time, etc. One difference between a suspend and a deactivate could be, e.g., a deactivate would delete all user data associated with the VM or service whereas a suspend would not. The handling of Custom OTA messages essentially creates a new sub-system that is substantially more complex than a mere invoking of a new application.

A message comes into the device via its hardware layer 20 and then passes through a rule machine 35 in the virtual layer 30, that determines which entity is to receive the message. For Type I messages, data in a header of the message helps the rule machine determine which OS should handle the message. For Custom OTA messages, these are passed on to the host OS 130 which routes these messages to the VM manager 150 located in the host system 100.

The VM manager 150 performs various checks on the Custom OTA messages to ensure that they are proper. For example, the VM manager can maintain a table the indicates all possible VMs that can be run on the device 10 along with their current status

(inactive, active, suspended, etc.). If, for example, the VM manager 150 receives an activation message for a VM that it does not have, or for a VM that is already active, the VM can perform error handling (e.g., message on display screen to user, message back to message sender, etc.).

When a Custom OTA message appears to be proper, the VM manager 150 communicates with the provisioning client 40 located within the virtualization layer 30 and instructs it to take the appropriate action, such as initiating the VM. The provisioning client 40 then handles the logistics associated with the respective request for activation, deactivation, suspension, etc. of the virtual machine, and reports back a status to the VM manager 150 (e.g., successful, warning, error). For example, for activating the VM 200, the provisioning client 40 runs software that invokes the virtual machine 200 with its guest OS 230 and can direct the guest OS 230 to initialize any applications 210, 220 present, such as a contact list, dialer, etc. The user can also be given the opportunity to download new applications from within the VM. Although in a preferred embodiment, the VM manager 150 does not need to keep track of the applications subsequently installed in the VM instances, it is also possible that the VM can track such applications for, e.g., accounting/informational purposes.

Similarly, for deactivating the VM 200, the provisioning client 40 can invoke an orderly shutdown of the VM, instructing the guest OS 230 to properly terminate all running applications 210, 220, and freeing up any memory/stored data. The provisioning client 40 sends a status update to the host system 100, and the VM manager 150 can then update the VM status in the table, and possibly send a message back to the external server 500 indicating the status.

The device 10 can talk to a variety of external servers/services 500, and not all of them need to be capable of providing Custom OTA messages. Existing external servers 500 can still interact with the device 10 as they would a normal device by sending Type I messages. However, in order to take advantage of the primary feature of this device, at least one external server 500 needs to have the ability to send Custom OTA messages to the device 10.

The data table associated with the VM manager 150 can also identify an amount of memory for the host OS 130 to set aside for each of the possible VMs. For Example, VM1 might have 50MB set aside for use in the event that VM1 is activated. This prevents an application in another OS from using that memory which might prevent activation of the VM, if such activation is requested.

Additional VMs could also be downloaded to the device 10 from an external host 500, or could be removed/modified. Any changes to the system would be reflected in the table associated with the VM manager 150, and any software needed to invoke either a virtual machine and/or an application associated with the virtual machine could be supplied. Furthermore, terms of a service associated with a particular VM could also be easily modified. For example, if a user wanted to upgrade the hours per month of a service associated with a VM, such a modification could be easily requested and provided by the external host 500.

Once the VM 200, 300 is activated, the host machine 100 generally takes a hands-off approach and does not involve itself with operation of the VM 200, 300 (other than to ensure that the status table is kept up to date/accurate). It is preferable that the management of VMs 200, 300 take place from the host machine 100, i.e., that the VMs not be used to invoke and manage other VMs.

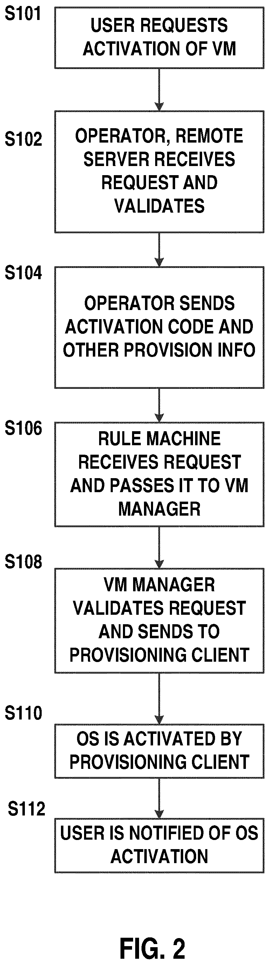

Figure 2 illustrates steps that might occur in order to activate a particular VM on a machine. When a user first receives the device 10, all VMs may be in an inactive/deactivated state, and the user sees on the display only one active OS available to use (the host OS 130 or main OS, which is preferably running in native mode on the device).

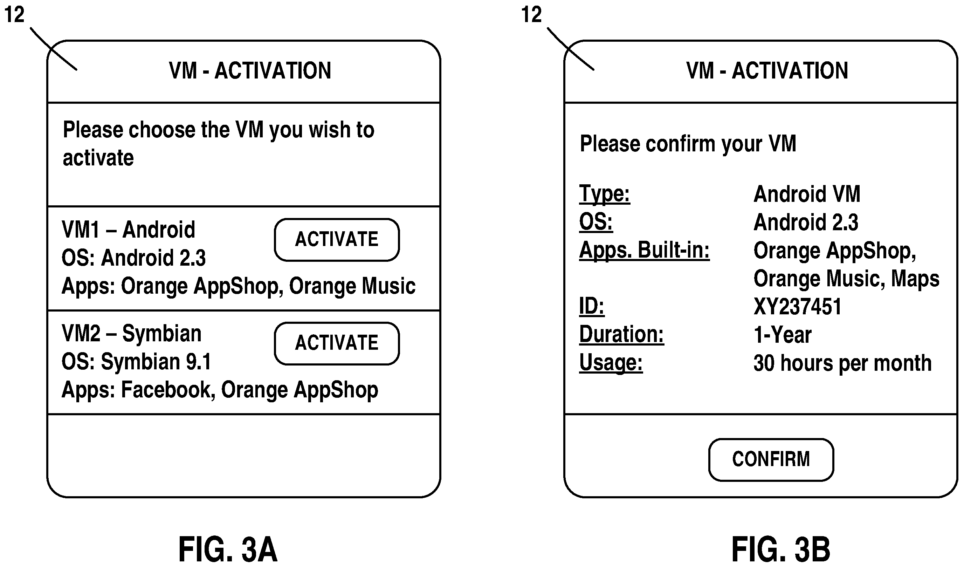

In block S101, the user requests activation of a particular VM. Such a request could originate by a user selecting from a list of possible VMs presented on the display 12 (Figures 3A, B) of the device 10 when operating the device within the host system 100. The selection/entry could be performed via a touchscreen of the device 10 or through a keyboard or other control element (arrow buttons and the like). The list of possible VMs, along with any associated data needed (or even VM code itself) for activating them, is preferably preloaded onto the device 10 prior to use by the user. However, it is also possible that this list/data (and possibly updates) can be downloaded by the host system 100 itself, or even pushed down to the device 10 by the external server 500.

The user request in block S101 may include transmitting, e.g., a device ID, an instance ID (a unique id which identifies the VM instance, such as "VM1 Android, OS: Android 2.3 with Apps: Orange AppShop, Orange Music"), and, where the request relates to a particular type of communications service, a duration (e.g., unlimited usage, one month, fixed minutes, etc.) along with the activation request. As noted above, the user request originating from the device 10 itself is not necessary. Activation, deactivation, suspension, etc., can be "pushed" to the device 10-this might happen when a user calls a customer service rep. to make changes, or in response to free promotions, etc.

In block S102, a remote operator, server, or service 500 (operator, for short) receives the activation request via the communication link 550 and validates it, perhaps based on whether a particular payment has been made, other billing information, or other factors (although validation could be performed automatically). In block S104, the operator sends an activation code and other provision information, such as built-in applications, data connection settings, etc., to the device 10. This could be done via SMS or WAP gateways.

On the device 10, in block S106, the rule machine 30 receives the request, and determines that it is a Custom OTA message, directing it to the VM manager 150 of the host machine 100. In block S108, the VM manager 150, after verifying that the request is associated with a legitimate inactive VM available on the machine, passes it on to the provisioning client 40 of the virtualization layer 30. The provisioning client 40 then attempts to activate an instance 230 of the VM 200 to be activated.

In block S110, the OS 230 of the VM 200 is activated, and, in block S112, the user is notified of the OS activation (or other information, such as an error indication if a problem was encountered).

Thus, the virtualization layer 30 is responsible for providing updates on the current active, inactive, and available VMs in the system 10 to the host OS 130. The provisioning client 40 is responsible for preparing, activating, deactivating and routing the messages to the newly requested VM. The status of the operation is sent back to the host OS for providing a switch mechanism to the user, which is an element that the user can use to switch between the host machine 100 and activated virtual machines 200, 300. Preferably, this switch is in the form of an icon on the display that appears in a common form across machines (host and virtual). When this icon or button is selected, a menu of can be displayed that shows all of the active VMs available on the system. The user can then select an active VM from this menu and switch to it or perform some other operation on the VM. For example, by selecting the switch VM app icon, the user can change the electronic device 10 environment from an Apple OS to an Android OS. Alternately, some other UI element could be provided for selecting the VM/application.

In an embodiment, the activation codes may be associated to carrier usage or data plans. The data or usage plans may then uploaded from the server side when the user runs the VM unlocking application provided on the device 10. In this way, possible data plans available to the user are only uploaded when the user decides to unlock one or more VMs. The operator can change the data plans at will to allow sales, bargains, short time promotions, etc. Also, it is possible for the user to decide to change data plans if desired.

In a preferred embodiment, the activation and deactivation of VMs occurs from a single external server 500, which locks the device 10 for exclusive access to perform these functions. However, it is also conceivable that a plurality of external servers 500 could act in a cooperative manner to share this level of control of the device.

The system or systems described herein may be implemented on any form of computer or computers and the components may be implemented as dedicated applications or in client-server architectures, including a web-based architecture, and can include functional programs, codes, and code segments. Any of the computers may comprise a processor, a memory for storing program data and executing it, a permanent storage such as a disk drive, a communications port for handling communications with external devices, and user interface devices, including a display, keyboard, mouse, etc. When software modules are involved, these software modules may be stored as program instructions or computer readable codes executable on the processor on a computer-readable media such as read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion. This media is readable by the computer, stored in the memory, and executed by the processor.

For the purposes of promoting an understanding of the principles of the invention, reference has been made to the preferred examples illustrated in the drawings, and specific language has been used to describe these examples. However, no limitation of the scope of the invention is intended by this specific language. The invention is defined by the claims. Any other references to embodiments in the description are to be considered to represent merely further examples.

The present invention may be described in terms of functional block components and various processing steps. Such functional blocks may be realized by any number of hardware and/or software components that perform the specified functions. For example, the present invention may employ various integrated circuit components, e.g., memory elements, processing elements, logic elements, look-up tables, and the like, which may carry out a variety of functions under the control of one or more microprocessors or other control devices. Similarly, where the elements of the present invention are implemented using software programming or software elements the invention may be implemented with any programming or scripting language such as C, C++, Java, assembler, or the like, with the various algorithms being implemented with any combination of data structures, objects, processes, routines or other programming elements. Functional aspects may be implemented in algorithms that execute on one or more processors. Furthermore, the present invention could employ any number of conventional techniques for electronics configuration, signal processing and/or control, data processing and the like. The words "mechanism" and "element" are used broadly and are not limited to mechanical or physical embodiments, but can include software routines in conjunction with processors, etc.

The particular implementations shown and described herein are illustrative examples of the invention and are not intended to otherwise limit the scope of the invention in any way. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. Moreover, no item or component is essential to the practice of the invention unless the element is specifically described as "essential" or "critical".

The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The use of the terms "a" and "an" and "the" and similar referents in the context of describing the invention (especially in the context of the following claims) should be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein are performable in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed.

### TABLE OF REFERENCE CHARACTERS

- 10: user device
- 20: hardware layer
- 30: virtualization layer
- 40: provisioning client
- 100: host system
- 110, 120: host system applications
- 130: host system operating system (OS)
- 150: virtual machine manager
- 200: virtual machine 1 (VM1)
- 210: application 1 (APP1) for VM1
- 220: application 2 (APP2) for VM1
- 230: guest OS2
- 300: virtual machine 2 (VM2)
- 310: application 1 (APP1) for VM2
- 320: application 2 (APP2) for VM2
- 330: guest OS1
- 500: external server/service
- 550: communication link

## Claims

1. A method for activating a virtual machine (200, 300) from a plurality of inactive virtual machines available in an electronic device (10), comprising, at the electronic device (10):
initiating (S101) a request to activate a virtual machine (200, 300) selected from the plurality of inactive virtual machines, and,
transmitting (S102) the request to activate, along with a device identifier and a unique identifier which identifies the selected virtual machine (200, 300), to an external server (500)
initiating a host machine (100) on the device, the host machine having a virtual machine manager (150) that manages the plurality of inactive virtual machines (200, 300);
receiving (S106), in a virtualization layer (30) of the device, a request from an external server (500) to initiate an activation of the virtual machine (200, 300), wherein the request to initiate an activation comprises an activation code associated with one of the plurality of inactive virtual machines (200, 300) selected to be activated from the plurality of inactive virtual machines (200, 300) on the device;
sending, by the virtualization layer(30), the received request to the virtual machine manager (150) of the host machine (100);
verifying, (S108) by the virtual machine manager(150), using a processor of the device, that the request to initiate the activation is a proper request, and if so, instructing a provisioning client (40) that is a part of the virtualization layer (30) to activate the virtual machine (200, 300) selected with the request;
activating (S110) the inactive virtual machine (200, 300) selected with the request, by the provisioning client (40).

2. The method according to claim 1, further comprising:
receiving, by the device in a virtualization layer (40), a command from an external server (500) that is a request to initiate a deactivation of a virtual machine (200, 300) that is active on the device;
sending the received command by the virtualization layer (30) to the virtual machine manager (15) of the host machine (100);
verifying, by the virtual machine manager (150), using a processor of the device, that the deactivation initiation request is a proper request, and if so, instructing a provisioning client (30) that is a part of the virtualization layer (30) to deactivate the virtual machine(200, 300); and
deactivating the virtual machine (200, 300) by the provisioning client (40).

3. The method according to claim 2, further comprising:
deleting user data associated with the deactivated or inactive virtual machine (200, 300).

4. The method according to claim 1, further comprising:
receiving, by the device in a virtualization layer, (30) a command from an external server (500) that is a request to initiate a suspension of a virtual machine (200, 300) that is active on the device;
sending the received command by the virtualization layer (30) to the virtual machine manager (150) of the host machine (100);
verifying, by the virtual machine manager (150), using a processor of the device, that the suspension initiation request is a proper request, and if so, instructing a provisioning client (40) that is a part of the virtualization layer (30) to suspend the virtual machine(100); and
deactivating the virtual machine (200, 300) by the provisioning client (40).

5. The method according to claim 4, further comprising:
maintaining user data associated with the deactivated or inactive virtual machine (200, 300).

6. The method according to one of the previous claims, further comprising:
prior to initially activating the device by the end user, preinstalling the plurality of locked inactive virtual machines (200, 300) on the device.

7. The method according to claim 1, further comprising:
selecting the virtual machine f(200, 300) rom a menu displayed on a screen of a user interface of the device.

8. The method according to claim 1, further comprising:
transmitting with the request at least one network parameters amount of airtime in a given time unit, and data volume..

9. An electronic device, comprising:
a processor; and
a plurality of inactive virtual machines (200, 300) that are executable on said processor through a virtualization layer (30);
wherein the processor comprises:
a host machine (100) that comprises a virtual machine manager (150) arranged to manage the plurality of inactive virtual machines (200, 300),
a virtualization layer (30) arranged to :
receive a request from an external server (500) to initiate an activation of the virtual machine (200, 300), wherein the request to initiate the activation comprises an activation code associated with one of the plurality of inactive virtual machines (200, 300) selected to be activated from the plurality of inactive virtual machines (200, 300) on the device, send the received request to the virtual machine manager (150) of the host machine (100),
wherein the virtual machine manager (150) is arranged to :
verify, using the processor, that the request to initiate the activation is a proper request, and if so, instructing a provisioning client (40) that is a part of the virtualization layer (30) to activate the inactive virtual machine selected with the request, wherein the processor is further arranged to :
initiate a request to activate a virtual machine (200, 300) selected from the plurality of inactive virtual machines (200, 300), and transmit the request to activate, along with a device identifier and a unique identifier which identifies the selected virtual machine, to the external server (500).

10. A computer program product recorded on a storage medium and comprising instructions, which when executed cause a processor to implement the method according to any one of claims 1 to 8.

## Patentansprüche

1. Verfahren zur Aktivierung einer virtuellen Maschine (200, 300) von einer Vielzahl inaktiver virtueller Maschinen die in einer elektronischen Vorrichtung (10) verfügbar sind, aufweisend, bei der elektronischen Vorrichtung (10):
Einleiten (S101) einer Anfrage, eine virtuelle Maschine (200, 300) zu aktivieren, die aus der Vielzahl inaktiver virtueller Maschinen ausgewählt ist, und
Senden (S102) der Aktivierungsanfrage, gemeinsam mit einer Vorrichtungskennung und einer einzigartigen Kennung, die die ausgewählte virtuelle Maschine (200, 300) identifiziert, an einen externen Server (500),
Einleiten einer Hostmaschine (100) auf der Vorrichtung, wobei die Hostmaschine einen virtuellen Maschinenverwalter (150) hat, der die Vielzahl inaktiver virtueller Maschinen (200, 300) verwaltet;
Empfangen (S106), in einer Virtualisierungsschicht (30) der Vorrichtung, einer Anfrage von einem externen Server (500), um eine Aktivierung der virtuellen Maschine (200, 300) einzuleiten, wobei die Anfrage, eine Aktivierung einzuleiten, einen Aktivierungscode aufweist, der mit einer der Vielzahl inaktiver virtueller Maschinen (200, 300) verknüpft ist, die aus der Vielzahl inaktiver virtueller Maschinen (200, 300) auf der Vorrichtung zur Aktivierung ausgewählt ist;
Senden, durch die Virtualisierungsschicht (30), der empfangenen Anfrage an den virtuellen Maschinenverwalter (150) der Hostmaschine (100);
Verifizieren (S108) durch den virtuellen Maschinenverwalter (150), unter Verwendung eines Prozessors der Vorrichtung, dass die Aktivierungseinleitungsanfrage eine ordentliche Anfrage ist, und falls dem so ist, Anweisen eines Ausstellungsclients (40), der ein Teil der Virtualisierungsschicht (30) ist, die virtuelle Maschine (200, 300), die mit der Anfrage ausgewählt ist, zu aktivieren;
Aktivieren (S110) der inaktiven virtuellen Maschine (200, 300), die mit der Anfrage ausgewählt ist, durch den Ausstellungsclient (40).

2. Verfahren nach Anspruch 1, ferner aufweisend:
Empfangen, durch die Vorrichtung in einer Virtualisierungsschicht (40), eines Befehls von einem externen Server (500), der eine Anfrage ist, eine Deaktivierung einer virtuellen Maschine (200, 300), die auf der Vorrichtung aktiv ist, einzuleiten;
Senden des empfangenen Befehls durch die Virtualisierungsschicht (30) an den virtuellen Maschinenverwalter (15) der Hostmaschine (100);
Verifizieren, durch den virtuellen Maschinenverwalter (150), unter Verwendung eines Prozessors der Vorrichtung, dass die Deaktivierungseinleitungsanfrage eine ordentliche Anfrage ist, und falls dem so ist, Anweisen eines Ausstellungsclients (30), der ein Teil der Virtualisierungsschicht (30) ist, die virtuelle Maschine (200, 300) zu deaktivieren; und
Deaktivieren der virtuellen Maschine (200, 300) durch den Ausstellungsclient (40).

3. Verfahren nach Anspruch 2, ferner aufweisend:
Löschen von Anwenderdaten, die mit der deaktivierten oder inaktiven virtuellen Maschine (200, 300) verknüpft sind.

4. Verfahren nach Anspruch 1, ferner aufweisend:
Empfangen, durch die Vorrichtung in einer Virtualisierungsschicht (30), eines Befehls von einem externen Server (500), der eine Anfrage ist, ein Aussetzen einer virtuellen Maschine (200, 300) einzuleiten, die auf der Vorrichtung aktiv ist;
Senden des empfangenen Befehls durch die Virtualisierungsschicht (30) an den virtuellen Maschinenverwalter (150) der Hostmaschine (100);
Verifizieren, durch den virtuellen Maschinenverwalter (150), unter Verwendung eines Prozessors der Vorrichtung, dass die Aussetzungseinleitungsanfrage eine ordentliche Anfrage ist, und falls dem so ist, Anweisen eines Ausstellungsclients (40), der ein Teil der Virtualisierungsschicht (30) ist, die virtuelle Maschine (100) auszusetzen; und
Deaktivieren der virtuellen Maschine (200, 300) durch den Ausstellungsclient (40).

5. Verfahren nach Anspruch 4, ferner aufweisend:
Beibehalten von Anwenderdaten, die mit der deaktivierten oder inaktiven virtuellen Maschine (200, 300) verknüpft sind.

6. Verfahren nach einem der vorangehenden Ansprüche, ferner aufweisend:
vor anfänglichem Aktivieren der Vorrichtung durch den Endanwender, Vorinstallieren der Vielzahl gesperrter inaktiver virtueller Maschinen (200, 300) auf der Vorrichtung.

7. Verfahren nach Anspruch 1, ferner aufweisend:
Auswählen der virtuellen Maschine (200, 300) aus einem Menü, das auf einem Bildschirm einer Anwenderschnittstelle der Vorrichtung angezeigt ist.

8. Verfahren nach Anspruch 1, ferner aufweisend:
Senden mit der Anfrage mindestens eines von Netzwerkparametern zu Sendezeit in einer gegebenen Zeiteinheit und Datenvolumen.

9. Elektronische Vorrichtung, aufweisend:
einen Prozessor; und
eine Vielzahl inaktiver virtueller Maschinen (200, 300), die auf dem Prozessor durch eine Virtualisierungsschicht (30) durchführbar sind;
wobei der Prozessor aufweist:
eine Hostmaschine (100), die einen virtuellen Maschinenverwalter (150) aufweist, der angeordnet ist, die Vielzahl inaktiver virtueller Maschinen (200, 300) zu verwalten,
eine Virtualisierungsschicht (30), angeordnet zum:
Empfangen einer Anfrage von einem externen Server (500), um eine Aktivierung der virtuellen Maschine (200, 300) einzuleiten, wobei die Anfrage, die Aktivierung einzuleiten, einen Aktivierungscode aufweist, der mit einer der Vielzahl inaktiver virtueller Maschinen (200, 300) verknüpft ist, die ausgewählt sind, von der Vielzahl inaktiver virtueller Maschinen (200, 300) auf der Vorrichtung aktiviert zu werden,
Senden der empfangenen Anfrage an den virtuellen Maschinenverwalter (150) der Hostmaschine (100),
wobei der virtuelle Maschinenverwalter (150) angeordnet ist zum:
Verifizieren, unter Verwendung des Prozessors, dass die Anfrage die Aktivierung einzuleiten, eine ordentliche Anfrage ist, und falls dem so ist, Anweisen eines Ausstellungsclients (40), der ein Teil der Virtualisierungsschicht (30) ist, die inaktive virtuelle Maschine zu aktivieren, die mit der Anfrage ausgewählt ist,
wobei der Prozessor ferner angeordnet ist zum:
Einleiten einer Anfrage, eine virtuelle Maschine (200, 300) zu aktivieren, die aus der Vielzahl inaktiver virtueller Maschinen (200, 300) ausgewählt ist, und
Senden der Aktivierungsanfrage, gemeinsam mit einer Vorrichtungskennung und einer einzigartigen Kennung, die die ausgewählte virtuelle Maschine identifiziert, an den externen Server (500).

10. Computerprogrammprodukt, das auf einem Datenspeichermedium aufgezeichnet ist und Anweisungen aufweist, die, wenn durchgeführt, einen Prozessor veranlassen, das Verfahren nach einem der Ansprüche 1 bis 8 zu implementieren.

## Revendications

1. Procédé d'activation d'une machine virtuelle (200, 300) parmi une pluralité de machines virtuelles inactives disponibles dans un dispositif électronique (10), comprenant, au niveau du dispositif électronique (10), les étapes consistant à :
lancer (S101) une demande d'activation d'une machine virtuelle (200, 300) sélectionnée parmi la pluralité de machines virtuelles inactives, et
transmettre (S102) la demande d'activation, avec un identifiant de dispositif et un identifiant unique qui identifie la machine virtuelle sélectionnée (200, 300), à un serveur externe (500)
lancer une machine hôte (100) sur le dispositif, la machine hôte ayant un gestionnaire de machines virtuelles (150) qui gère la pluralité de machines virtuelles inactives (200, 300) ;
recevoir (S106), dans une couche de virtualisation (30) du dispositif, une demande d'un serveur externe (500) pour lancer une activation de la machine virtuelle (200, 300), ladite demande de lancement d'une activation comprenant un code d'activation associé à une machine de la pluralité de machines virtuelles inactives (200, 300) sélectionnée pour être activée parmi la pluralité de machines virtuelles inactives (200, 300) sur le dispositif ;
envoyer, par la couche de virtualisation (30), la demande reçue au gestionnaire de machines virtuelles (150) de la machine hôte (100) ;
vérifier (S108) par le gestionnaire de machines virtuelles (150), en utilisant un processeur du dispositif, que la demande de lancement de l'activation est une demande appropriée, et si tel est le cas, demander à un client de service (40) faisant partie de la couche de virtualisation (30) d'activer la machine virtuelle (200, 300) sélectionnée avec la demande ;
activer (S110) la machine virtuelle inactive (200, 300) sélectionnée avec la demande par le client de service (40).

2. Procédé selon la revendication 1, comprenant en outre les étapes consistant à :
recevoir, par le dispositif dans une couche de virtualisation (40), une commande d'un serveur externe (500) qui est une demande de lancement d'une désactivation d'une machine virtuelle (200, 300) active sur le dispositif ;
envoyer la commande reçue par la couche de virtualisation (30) au gestionnaire de machines virtuelles (15) de la machine hôte (100) ;
vérifier par le gestionnaire de machines virtuelles (150), en utilisant un processeur du dispositif, que la demande de lancement de la désactivation est une demande appropriée, et si tel est le cas, demander à un client de service (30) faisant partie de la couche de virtualisation (30) de désactiver la machine virtuelle (200, 300) ; et
désactiver la machine virtuelle (200, 300) par le client de service (40).

3. Procédé selon la revendication 2, comprenant en outre l'étape consistant à :
supprimer les données d'utilisateur associées à la machine virtuelle désactivée ou inactive (200, 300).

4. Procédé selon la revendication 1, comprenant en outre les étapes consistant à :
recevoir, par le dispositif dans une couche de virtualisation (30), une commande d'un serveur externe (500) qui est une demande de lancement d'une suspension d'une machine virtuelle (200, 300) active sur le dispositif ;
envoyer la commande reçue par la couche de virtualisation (30) au gestionnaire de machines virtuelles (150) de la machine hôte (100) ;
vérifier par le gestionnaire de machines virtuelles (150), en utilisant un processeur du dispositif, que la demande de lancement de la suspension est une demande appropriée, et si tel est le cas, demander à un client de service (40) faisant partie de la couche de virtualisation (30) de suspendre la machine virtuelle (100) ; et
désactiver la machine virtuelle (200, 300) par le client de service (40).

5. Procédé selon la revendication 4, comprenant en outre l'étape consistant à :
conserver les données d'utilisateur associées à la machine virtuelle désactivée ou inactive (200, 300).

6. Procédé selon l'une des revendications précédentes, comprenant en outre l'étape consistant à :
avant l'activation initiale du dispositif par l'utilisateur final, effectuer l'installation préalable de la pluralité de machines virtuelles inactives verrouillées (200, 300) sur le dispositif.

7. Procédé selon la revendication 1, comprenant en outre l'étape consistant à :
sélectionner la machine virtuelle (200, 300) à partir d'un menu affiché sur un écran d'une interface d'utilisateur du dispositif.

8. Procédé selon la revendication 1, comprenant en outre l'étape consistant à :
transmettre avec la demande au moins une quantité temps d'émission de paramètres du réseau dans une unité de temps donnée, ainsi qu'un volume de données.

9. Dispositif électronique, comprenant :
un processeur ; et
une pluralité de machines virtuelles inactives (200, 300) qui peuvent être exécutées sur ledit processeur par l'intermédiaire d'une couche de virtualisation (30) ;
dans lequel le processeur comprend :
une machine hôte (100) qui comprend un gestionnaire de machines virtuelles (150) conçu pour gérer la pluralité de machines virtuelles inactives (200, 300),
une couche de virtualisation (30) agencée pour :
recevoir une demande d'un serveur externe (500) pour lancer une activation de la machine virtuelle (200, 300), la demande de lancement de l'activation comprenant un code d'activation associé à une machine de la pluralité de machines virtuelles inactives (200, 300) sélectionnées pour être activées à partir de la pluralité de machines virtuelles inactives (200, 300) sur le dispositif, envoyer la demande reçue au gestionnaire de machines virtuelles (150) de la machine hôte (100),
dans lequel le gestionnaire de machines virtuelles (150) est agencé pour :
vérifier, à l'aide du processeur, que la demande de lancement de l'activation soit une demande appropriée, et si tel est le cas, demander à un client de service (40) faisant partie de la couche de virtualisation (30) d'activer la machine virtuelle inactive sélectionnée avec la demande,
dans lequel le processeur est en outre agencé pour :
lancer une demande d'activation d'une machine virtuelle (200, 300) sélectionnée parmi la pluralité de machines virtuelles inactives (200, 300), et
transmettre la demande d'activation, avec un identifiant de dispositif et un identifiant unique qui identifie la machine virtuelle sélectionnée, au serveur externe (500).

10. Produit logiciel informatique enregistré sur un support de stockage et comprenant des instructions, qui, lorsqu'elles sont exécutées, conduisent un processeur à mettre en oeuvre le procédé selon l'une quelconque des revendications 1 à 8.
